(19) Europäisches Patentamt
European Patent Office
Office européen des brevets

(11) Publication number: **0 031 990**
**B1**

(12) **EUROPEAN PATENT SPECIFICATION**

(45) Date of publication of patent specification: **09.05.84**

(51) Int. Cl.³: **C 10 M 1/28**

(21) Application number: **80302623.6**

(22) Date of filing: **31.07.80**

# (54) A lubricating oil composition, an additive concentrate for lubricating oil and a method for imparting anti-corrosion properties to lubricating oil.

(30) Priority: **20.12.79 US 105725**

(43) Date of publication of application:
**15.07.81 Bulletin 81/28**

(45) Publication of the grant of the patent:
**09.05.84 Bulletin 84/19**

(84) Designated Contracting States:
**BE DE FR GB IT NL**

(56) References cited:
**EP - A - 0 011 497**
**US - A - 3 101 374**
**US - A - 3 509 052**
**US - A - 3 784 474**

(73) Proprietor: **EDWIN COOPER INC.**
**1525 South Broadway**
**St. Louis Missouri 63104 (US)**

(72) Inventor: **Zaweski, Edward Felix**
**830 Carillon Court**
**Creve Coeur, St. Louis Missouri 63141 (US)**
Inventor: **Harstick, Christian Sidney**
**9251 Buxton**
**Crestwood Missouri 63126 (US)**

(74) Representative: **Bizley, Richard Edward et al,**
**BOULT, WADE & TENNANT 27 Furnival Street**
**London EC4A 1PQ (GB)**

**EP 0 031 990 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a lubricating oil composition, an additive concentrate for lubricating oil and a method for imparting anticorrosion properties to lubricating oil.

The invention is particularly concerned with oils such as crankcase lubricants for internal combustion engines. Such lubricants usually contain various additives which serve different functions. Thus, ashless dispersants may be added to prevent deposition of engine sludge. Zinc dihydrocarbyldithiophosphate may be added to inhibit wear and provide antioxidant protection. Alkaline earth metal alkylbenzene or petroleum sulfonates function as high temperature detergents. Overbased alkaline earth metal sulfonates or salicylates provide both detergent action and an alkaline reserve to protect engine parts against corrosion. The use of certain surfactants for lubricating oil is discussed in U.S. Patent Specifications Nos. 3,509,052 and 3,928,219. These include certain oxyalkylated polyols, oxyalkylated ethylenediamine, nonylphenyl polyethylene glycol ethers and the like. EP—A1—32 617 (priority 14.12.79; date of filing 8.12.80; date of publication 29.7.81) relates to a lubricating oil composition containing an oxyalkylated trimethylolalkane, an oxyalkylated alkylphenolformaldehyde condensation product and an overbased metal detergent. EP—A1—114 97 (priority 15.11.78, date of filing 15.11.79, date of publication 28.5.80) relates to a lubricating oil composition including an oxyalkylated sorbitan triester of a fatty acid, an oxyethylated alkylphenol and an overbased metal detergent.

It has now been found that an improved lubricating oil, e.g. a crankcase lubricating oil, is provided by including a small amount of an oxyalkylated trimethylol alkane and an oxyethylated alkylphenol. The oil also contains an overbased metal detergent. Tests have been carried out which demonstrate that the combination provides rust protection beyond that provided by either of the individual oxyalkylated components. The overbased metal detergent is generally an alkaline earth metal alkylbenzene sulfonate, petroleum sulfonate, phenate, sulfurized phenate or salicylate.

One preferred aspect of the invention is a lubricating oil composition comprising a major amount of lubricating oil and a minor corrosion inhibiting amount of the combination of (a) an oxyalkylated trimethylol alkane having a molecular weight of 1,000 to 8,000 in which an initial hydrophobic oxyalkylene block is bonded to a trimethylol alkane and a terminal hydrophilic oxyalkylene block is bonded to the other end of said hydrophobic block, said hydrophobic block consisting essentially of propyleneoxy units and optionally containing random ethyleneoxy units in an amount such that the average oxygen-to-carbon atom ratio in said hydrophobic block does not exceed 0.4, said hydrophobic block consisting essentially of ethyleneoxy units and optionally propyleneoxy units such that the oxygen-to-carbon atom ratio in said hydrophilic block is in excess of 0.4, said hydrophilic block forming 5 to 90 weight percent of said oxyalkylated trimethylol alkane, (b) an ethoxylated $C_{4-12}$ alkylphenol containing an average of 2 to 10 ethyleneoxy units and (c) an overbased metal detergent selected from alkaline earth metal alkylbenzene sulfonates, petroleum sulfonates, phenates, sulfurized phenates and salicylates.

Another aspect of the invention is an additive concentrate formulated for addition to lubricating oil and comprising both an oxyalkylated trimethylol alkane as defined above and an ethoxylated alkylphenol.

Yet another aspect of the invention is a method of imparting anti-corrosion properties to a lubricating oil by the incorporation of additives therein characterised by the incorporation as said oil additives of both an oxyalkylated trimethylol alkane as defined above and an ethoxylated alkylphenol.

The oxyalkylated trimethylol alkane may be made by first reacting a trimethylol alkane with propylene oxide or a mixture of propylene oxide and ethylene oxide having an oxygen-to-carbon atom ratio not in excess of 0.4. Propylene oxide has oxygen-to-carbon atom ratio of 0.33 and ethylene oxide has an oxygen-to-carbon ratio of 0.5. Hence an atom ratio of 0.33 to 0.4 would include propylene oxide containing from 0 to about 41 mole percent ethylene oxide.

More preferably, the hydrophobic block contains 5 to 40 mole percent ethyleneoxy units and 60 to 95 mole percent propyleneoxy units. The units are randomly distributed.

In some preferred embodiments the initial condensation of the hydrophobic block is conducted until the average combined molecular weight of trimethylol alkane and the hydrophobic block is 1,000 to 4,000.

Following this the intermediate oxyalkylated trimethylol alkane may be reacted with ethylene oxide or a mixture of ethylene oxide and propylene oxide in which the mixture has an average oxygen-to-carbon atom ratio in excess of 0.4. This reaction bonds a terminal hydrophilic oxyalkylene block to the reactive hydroxy end of the initial hydrophobic block.

Mixtures used to form the hydrophilic block contain in excess of 41 mole percent ethylene oxide. Preferably, the mixture contains at least 4 mole percent propylene oxide.

More preferably, the mixture used to form the hydrophilic block contains 4 to 40 mole percent propylene oxide and 60 to 96 mole percent ethylene oxide. The second condensation is carried out using sufficient ethylene oxide or ethylene oxide-propylene oxide mixture to form a hydrophilic block having 1,000 to 5,000 average mole weight.

Representative trimethylol alkanes include trimethylol ethane, propane or butane. In most

preferred embodiments the trimethylol alkane is usually a trimethylol propane. Preferred oxyalkylated trimethylol alkanes have the formula

$$\begin{array}{l} \quad\quad CH_2{+}OR_3{+}_q{+}OR_4{+}_rOH \\ \quad\quad | \\ R_5{-}C{-}CH_2{+}OR_3{+}_q{+}OR_4{+}_rOH \\ \quad\quad | \\ \quad\quad CH_2{+}OR_3{+}_q{+}OR_4{+}_rOH \end{array}$$

wherein $+OR_3+_q$ represents a hydrophobic block in which $R_3$ is a divalent aliphatic group containing 2 or 3 carbon atoms derived from propylene oxide and optionally ethylene oxide, $+OR_4+_r$ represents a hydrophilic block in which $R_4$ is a divalent aliphatic group containing 2 or 3 carbon atoms derived from ethylene oxide and optionally propylene oxide, $R_5$ is an alkyl group containing 1 to 4 carbon atoms and q and r are integers.

The hydrophobic block consists essentially of propyleneoxy units but can contain up to 41 mole percent random ethyleneoxy units such that the average oxygen-to-carbon atom ratio does not exceed 0.4. For example, when $+OR_3+_q$ are all propyleneoxy units the oxygen-to-carbon atom ratio is 0.33. When 41 mole percent of the $+OR_3+_q$ are ethyleneoxy units the oxygen-to-carbon atom ratio is 0.4.

The hydrophilic block consists mainly of ethyleneoxy units. Preferably it contains at least four mole percent propyleneoxy units such that the oxygen-to-carbon atom ratio is in excess of 0.4. For example, when the hydrophilic block contains 4 mole percent propyleneoxy units, the oxygen-to-carbon atom ratio is 0.49 and when the hydrophilic block contains 50 mole percent propyleneoxy units the oxygen-to-carbon atom ratio is 0.41. Thus, the hydrophilic block contains up to about 50 mole percent propyleneoxy units, the remainder being ethyleneoxy units.

Each q and each r are independently selected integers and are such that the molecular weight of the oxyalkylated trimethylol alkane is 1,000 to 8,000 and the hydrophilic block $+OR_4+_r$ forms 5 to 90 weight percent of the oxyalkylated trimethylol alkane.

In some preferred embodiments the hydrophobic block $+OR_3+_q$ consists essentially of propyleneoxy units. In a more preferred embodiment, the hydrophobic block consists essentially of 60 to 95 mole percent propyleneoxy units and 5 to 40 mole percent ethyleneoxy units.

In still more preferred embodiments, q is selected such that the combined molecular weight of the trimethylol alkane and hydrophobic blocks is 1,000 to 4,000 and r is selected such that the combined molecular weight of the hydrophilic block is 1,000 to 5,000 and q and r are further selected such that the average molecular weight of the oxyalkylated trimethylol alkane is 3,000 to 6,000.

The oxyalkylated trimethylol propanes which may be used in this invention are known compounds. They are described in U.S. Patent Specification No. 3,101,374 and can be obtained from BASF Wyandotte Corporation under the name "Pluradot" (Registered Trademark). They are available in various molecular weights. Pluradot HA-510 has an average molecular weight of 4,600. Pluradot HA-520 has an average molecular weight of 5,000 and Pluradot HA-530 has an average molecular weight of about 5,300. All of these are very effective in the present invention.

The other required component to impart corrosion resistance in accordance with the present invention is an ethoxylated alkylphenol. Preferably, the alkylphenol contains about 4 to 12 carbon atoms in the alkyl group. More preferably, the alkyl group contains about 7 to 12 carbon atoms, e.g. in heptylphenol, 2-ethylhexylphenol, decyphenol or dodecyphenol. The most preferred alkylphenol is nonylphenol.

The ethoxylated alkylphenol may be made by reacting the alkylphenol with ethylene oxide until the desired number of ethyleneoxy groups are reacted. Preferably there are an average of 2 to 10 ethyleneoxy groups per each alkylphenol. More preferably each alkylphenol has an average of 3 to 5 ethyleneoxy groups per molecule. The most preferred additive is an ethoxylated nonylphenol containing an average of about 4 oxyethylene groups. Such additives are commercially available. One such additive is marketed by Monsanto Company under the name "Sterox ND" (Registered Trademark).

The amount of each additive used need only be an amount such that together they provide adequate corrosion and rust protection, e.g. in an engine. A useful range is 0.005 to 0.3 weight percent of the oxyalkylated trimethylol alkane and 0.01 to 0.5 weight percent of the oxyethylated alkylphenol.

Coadditives are also generally included in a fully formulated crankcase lubricant. Examples of these are dispersants such as the polyisobutyl succinimide of ethylenepolyamine and polyisobutylphenol Mannich condensates with formaldehyde and ethylenepolyamine. Metal detergents such as calcium alkylbenzene sulfonates, magnesium petroleum sulfonate, calcium salicylates and calcium alkylphenates are conventionally included.

Of special importance in preventing rust are the overbased metal detergents. These include overbased alkaline earth metal alkylbenzene sulfonates, petroleum sulfonates, phenates, salicylates and the like. Examples of these are overbased calcium alkylbenzene sulfonates, overbased calcium petroleum sulfonate, overbased magnesium alkylbenzene sulfonates, overbased calcium salicylate, overbased calcium alkylphenates, overbased magnesium alkylphenate sulfides and the like. Overbasing methods are well known. For example, an alkylbenzene sulfonic acid having an equivalent

weight of 300 to 2,000 can be overbased by reaction with excess calcium oxide in the presence of water and methanol followed by carbon dioxide injection. The colloidal alkaline earth metal base in these additives serves to neutralize acids in blow-by gases formed in combustion.

Viscosity index improvers are generally added to improve the viscosity property of the formulated oil. These include the polyalkylmethacrylate type and the olefin copolymer type. Examples of the latter are ethylenepropylene copolymer, styrene/butadiene copolymer and the like.

Phosphosulfurized olefins can be added such as phosphosulfurized terpenes or phosphosulfurized polybutenes. These may be further reacted by steam blowing or by neutralization with alkaline earth metal bases such as barium oxide.

Phenolic antioxidants are frequently added to the oil compositions. Examples of these are 4,4′-methylenebis-(2,6-di-tert-butylphenol), 2,6-di-tert-butyl-4-dimethyl-aminomethylphenol, 4,4′-thiobis-(2,6-di-tert-butylphenol) and the like.

Zinc salts of dihydrocarbyldithiophosphoric acid are routinely added to provide both wear and antioxidant protection. A typical example is zinc di-(2-ethylhexyl)dithiophosphate.

The following Example illustrates the preparation of a typical formulated oil in accordance with the invention suitable for use in an engine crankcase.

Example 1

In a blending vessel place 3785 litres (1,000 gallons) 150 Saybolt Universal Seconds (SUS) solvent refined mineral oil. To this add 378.5 litres (100 gallons) 1-decene oligomer containing mainly trimers and tetramers. Add sufficient zinc isobutylamyldithiophosphate to provide 0.07 weight percent zinc. Add overbased (TBN 300) calcium alkylbenzene sulphonate in an amount to provide 0.15 weight percent calcium "TBN 300" is a measure of a total base number in terms of equivalent mg of KOH per gram. Thus the alkaline reserve in the oil is equivalent to 300 mg KOH/gram of oil. Add 113.6 litres (30 gallons) of a poly-laurylmethacrylate viscosity index (VI) improver. Add sufficient polyisobutyl succinimide of tetraethylene pentamine to provide 3 weight percent active dispersant. Add 0.03 weight percent Pluradot HA-510 and 0.3 weight percent Sterox ND. Blend the oil until homogenous and package for distribution.

In many cases the additive combination of this invention is first packaged in an additive concentrate formulated for addition to lubricating oil. As already indicated, such additive concentrates are included in the invention. These concentrates most usually contain conventional additives, such as those listed above, in addition to the oxyalkylated trimethylol alkane and ethoxylated alkylphenol described herein. The various additives are present in a proper ratio such that when a quantity of the concentrate is added to lubricating oil, the various additives are all present in the proper concentration. The additive concentrate also normally contains mineral oil in order to maintain it in liquid form. The following Example illustrates the formulation of an additive concentrate in accordance with the invention and formulated for addition to lubricating oil to provide an effective crankcase lubricant.

Example 2

In a blending vessel place 545.2 kg (1199.5 pounds) of 100 SUS (standard empirical measure of viscosity as Saybolt Universal Seconds) mineral oil, 356.4 kg (784 pounds) of polyisobutyl succinimide of tetraethylene pentamine, 1069.1 kg (2352 pounds) of ethylene/propylene copolymer VI (Viscosity Index) improver, 115.8 kg (254.8 pounds) of zinc di-(2-ethylhexyl)dithiophosphate, 111.4 kg (245 pounds) of Pluradot HA-520 and 26.7 kg (58.8 pounds) of Sterox ND. Blend until homogenous and then package. The addition of 1113.6 kg (2450 pounds) of the above concentrate to 3787 litres (1,000 gallons) of 150 SUS mineral oil will provide an effective crankcase lubricant.

Tests were carried out which demonstrate the corrosion protection provided by the present additive combination. These tests have been found to correlate with the Multi Cylinder Engine Sequence IId tests. "IId" is an industry standard engine test conducted according to a procedure defined by American Society of Testing Materials "ASTM" to measure rust protection in an engine crankcase. In the test an oil blend is prepared containing a commercial succinimide ashless dispersant, a zinc dialkyldithiophosphate, an ethylene/propylene copolymer VI improver and 0.14 percent calcium as a 300 TBN overbased alkylbenzene sulfonate. "TBN 300" is a measure of a total base number in terms of equivalent mg of KOH per gram. Thus, the alkaline reserve in the oil is equivalent to 300 mg KOH/gram of oil.

Thirty ml of 0.01 N hydrochloric acid is placed in a cell and heated to 50°C. Then 20 ml of the test oil blend is added and the mixture stirred for 10 minutes while measuring pH. The gradual increase in pH is measured over a 10-minute period and the results stated in terms of pH change per minute. It has been found that an increase of at least 0.4 pH units per minute indicates that the oil will pass the standard IId engine test. The following results were obtained in a series of these tests.

| Additive | Conc. (wt. %) | pH Shift (units/min) |
|---|---|---|
| 1. Sterox ND | 0.3 | 0.48 |
| 2. Pluradot HA-510 | 0.3 | 0.50 |
| 3. Sterox ND | 0.15 | 0.59 |
| Pluradot HA-510 | 0.15 | |

As the above results show, the combination produces synergistic results in that their combined effect is greater than either component could contribute individually at the same concentration.

## Claims

1. A lubricationg oil composition containing:

(a) an oxyalkylated trimethylol alkane having a molecular weight of 1,000 to 8,000 in which a hydrophobic oxyalkylene block is bonded at one end thereof to a trimethylol alkane and a hydrophilic oxyalkylene block is bonded to the other end of said hydrophobic block, said hydrophobic block consisting essentially of propyleneoxy units and optionally containing random ethyleneoxy units in an amount such that the average oxygen-to-carbon atom ratio in said hydrophobic block does not exeed 0.4, said hydrophilic block consisting essentially of ethyleneoxy units and optionally containing random propyleneoxy units such that the oxygen-to-carbon ratio in said hydrophilic block is in excess of 0.4, said hydrophilic block forming 5 to 90 weight percent of said oxyalkylated trimethylol alkane;
(b) an ethoxylated alkylphenol;
(c) an overbased metal detergent; and
(d) a lubricating oil.

2. A composition as claimed in claim 1, wherein the ethoxylated alkylphenol is an ethoxylated $C_{4-12}$ alkylphenol containing an average of 2 to 10 ethyleneoxy units.

3. A composition as claimed in claim 2, wherein said ethoxylated $C_{4-12}$ alkylphenol contains an average of 3 to 5 ethyleneoxy units.

4. A composition as claimed in any one of claims 1 to 3, wherein the alkylphenol is nonylphenol.

5. A composition as claimed in any one of claims 1 to 4, wherein the detergent (c) is selected from alkaline earth metal alkylbenzene sulfonates, petroleum sulfonates, phenates, sulfurized phenates and salicylates.

6. A composition as claimed in any one of claims 1 to 5, wherein trimethylol alkane is trimethylol propane.

7. A composition as claimed in any one of claims 1 to 6, wherein said hydrophobic block consists essentially of 60 to 95 mole percent propyleneoxy units and 5 to 40 mole percent ethyleneoxy units.

8. A composition as claimed in any one of claims 1 to 7, wherein said trimethylol alkane and hydrophobic block have a combined molecular weight of 1,000 to 4,000 and said hydrophilic block has a molecular weight of 1,000 to 5,000 such that the resultant molecular weight of said oxyalkylated trimethylol alkane is 3,000 to 6,000.

9. A composition as claimed in any one of claims 1 to 8, containing 0.005 to 0.3 weight percent of said oxyalkylated trimethylol alkane and 0.01 to 0.5 weight percent of said ethoxylated alkylphenol.

10. An additive concentrate formulated for addition to lubricating oil and comprising both an oxyalkylated trimethylol alkane and an ethoxylated alkylphenol both as defined in any one of claims 1 to 9.

11. A method of imparting anti-corrosion properties to a lubricating oil by the incorporation of additives therein characterised by the incorporation as said additives of both an oxyalkylated trimethylol alkane and an ethoxylated alkylphenol both as defined in any one of claims 1 to 9.

## Patentansprüche

1. Schmierölzubereitung enthaltend:

(a) ein oxyalkyliertes Trimethylolalkan mit einem Molekulargewicht von 1000 bis 8000, in dem ein hydrophober Oxyalkylen-Block an einem seiner Enden an ein Trimethylolalkan und ein hydrophiler Oxyalkylen-Block an das andere Ende dieses hydrophoben Blockes gebunden ist, der hydrophobe Block im wesentlichen aus Propylenoxid-Einheiten besteht und wahlweise unregelmäßig verteilte Ethylenoxid-Einheiten in einer Menge enthält, daß das mittlere Sauerstoff: Kohlenstoffatomverhältnis in dem hydrophoben Block 0,4 nicht übersteigt, der hydrophile Block im wesentlichen aus Ethylenoxid-Einheiten besteht und wahlweise unregelmäßig verteilte Propylenoxy-Einheiten in der Weise enthält, daß das Sauerstoff: Kohlenstoffverhältnis in dem hydrophilen Block mehr als 0,4 beträgt, wobei der hydrophile Block 5 bis 90 Gew.-% des oxyalkylierten Trimethylolalkans ausmacht,
(b) ein ethoxyliertes Alkylphenol,
(c) ein überbasisches Metall-Detergen und
(d) ein Schmieröl.

2. Zusammensetzung nach Anspruch 1, in der das ethoxylierte Alkylphenol ein ethoxyliertes $C_{4-12}$-Alkylphenol ist, das im Mittel 2 bis 10 Ethylenoxy-Einheiten enthält.

3. Zusammensetzung nach Anspruch 2, in der das ethoxylierte $C_{4-12}$-Alkylphenol im Mittel 3 bis 5 Ethylenoxy-Einheiten aufweist.

4. Zusammensetzung nach einem der Ansprüche 1 bis 3, in der das Alkylphenol Nonylphenol ist.

5. Zusammensetzung nach einem der Ansprüche 1 bis 4, in der das Detergen (c) aus

Erdalkali-Alkylbenzolsulfonaten, Petroleumsulfonaten, Phenaten, geschwefelten Phenaten und Salicylaten ausgewählt ist.

6. Zusammensetzung nach einem der Ansprüche 1 bis 5, in der das Trimethylolalkan Trimethylolpropan ist.

7. Zusammensetzung nach einem der Ansprüche 1 bis 6, in der der hydrophobe Block im wesentlichen aus 60 bis 95 Mol % Propylenoxy-Einheiten und 5 bis 40 Mol % Ethylenoxy-Einheiten besteht.

8. Zusammensetzung nach einem der Ansprüche 1 bis 7, in der das Trimethylolalkan und der hydrophobe Block zusammen ein Molekulargewicht von 1000 bis 4000 und der hydrophile Block ein Molekulargewicht von 1000 bis 5000 haben, so daß das resultierende Molekulargewicht des oxyalkylierten Trimethylolalkans 3000 bis 6000 beträgt.

9. Zusammensetzung nach einem der Ansprüche 1 bis 8, enthaltend 0,005 bis 0,3 Gew.% des oxyalkylierten Trimethylolalkans und 0,01 bis 0,5 Gew.% des ethoxylierten Alkylphenols.

10. Additiv-Konzentrat, formuliert zum Zusatz zu Schmieröl, enthaltend ein oxyalkyliertes Trimethylolalkan und ein ethoxyliertes Alkylphenol, beide gemäß einem der Ansprüche 1 bis 9.

11. Verfahren, mit dessen Hilfe man einem Schmieröl durch Zugabe von Additiven Antikorrosionseigenschaften verleiht, dadurch gekennzeichnet, daß man als Additive sowohl ein oxyalkyliertes Trimethylolalkan und ein ethoxyliertes Alkylphenol gemäß einem der Ansprüche 1 bis 9 zugibt.

**Revendications**

1. Composition d'huile lubrifiante, contenant:

(a) un triméthylolalcane oxyalkylé ayant un poids moléculaire de 1000 à 8000 dans lequel une séquence oxyalkylénique hydrophobe est liée à l'une de ses extrémités à un triméthylolalcane et une séquence hydrophile oxyalkylénique est liée à l'autre extrémité de ladite séquence hydrophobe, ladite séquence hydrophobe consistant essentiellement en motifs propylène-oxy et contenant éventuellement des motifs éthylène-oxy à disposition statistique en une quantité telle que le rapport moyen des atomes d'oxygène aux atomes de carbone dasn ladite séquence hydrophobe n'excède pas 0,4, ladite séquence hydrophile consistant essentiellement en motifs éthylène-oxy et contenant éventuellement des motifs propylène-oxy à disposition statistique de manière que le rapport de l'oxygène au carbone dans ladite séquence hydrophile dépasse 0,4, ladite séquence hydrophile formant 5 à 90% en poids dudit triméthylolalcane oxyalkylé;

(b) un alkylphénol éthoxylé;

(c) un détergent métallique rendu surbasique; et

(d) une huile lubrifiante.

2. Composition suivant la revendication 1, dans laquelle l'alkylphénol éthoxylé est un (alkyle en $C_4$ à $C_{12}$)-phénol éthoxylé contenant en moyenne 2 à 10 motifs éthylène-oxy.

3. Composition suivant la revendication 2, dans laquelle le (alkyle en $C_4$ à $C_{12}$)-phénol éthoxylé contient en moyenne 3 à 5 motifs éthylène-oxy.

4. Composition suivant l'une quelconque des revendications 1 à 3, dans laquelle l'alkylphénol est le nonylphénol.

5. Composition suivant l'une quelconque des revendications 1 à 4, dans laquelle le détergent (c) est choisi entre des alkylbenzènesulfonates, des pétrole-sulfonates, des phénates, des phénates sulfurés et des salicylates de métaux alcalino-terreux.

6. Composition suivant l'une quelconque des revendications 1 à 5, dans laquelle le triméthylolalcane est le triméthylpropane.

7. Composition suivant l'une quelconque des revendications 1 à 6, dans laquelle ladite séquence hydrophobe est essentiellement formée de 60 à 95 moles % de motifs propylène-oxy et de 5 à 40 moles % de motifs éthylène-oxy.

8. Composition suivant l'une quelconque des revendications 1 à 7, dans laquelle le triméthylolalcane et la séquence hydrophobe ont un poids moléculaire total de 1000 à 4000 et ladite séquence hydrophile a un poids moléculaire de 1000 à 5000, en sorte que le poids moléculaire résultant dudit triméthylolalcane oxyalkylé est compris entre 3000 et 6000.

9. Composition suivant l'une quelconque des revendications 1 à 8, contenant 0,005 à 0,3% en poids dudit triméthylolalcane oxyalkylé et 0,01 à 0,5% en poids dudit alkylphénol éthoxylé.

10. Concentré d'additifs formulé en vue de l'addition à une huile lubrifiante et comprenant à la fois un triméthylolalcane oxyalkylé et un alkylphénol éthoxylé, tous deux comme défini dans l'une quelconque des revendications 1 à 9.

11. Procédé pour conférer des propriétés anti-corrosion à une huile lubrifiante par l'incorporation d'additifs à cette huile, caractérisé en ce qu'on incorpore comme additifs un triméthylolalcane oxyalkylé et un alkylphénol éthoxylé tous deux tels que définis dans l'une quelconque des revendications 1 à 9.